# EUROPÄISCHE PATENTSCHRIFT

(11) **EP 1 353 828 B1**
(45) Veröffentlichungstag und Bekanntmachung des Hinweises auf die Patenterteilung: **15.10.2008**
(21) Anmeldenummer: 02704659.8
(22) Anmeldetag: 19.01.2002
(51) Int. Cl.: B60T 7/12

(54) **VERFAHREN ZUR REALISIERUNG DER FUNKTION "KONSTANTE GESCHWINDIGKEIT IM GEFÄLLE"**
METHOD FOR PERFORMING THE FUNCTION "CONSTANT SPEED ON THE GRADIENT"
PROCEDE DE MISE EN OEUVRE DE LA FONCTION "VITESSE CONSTANTE EN DECLIVITE"

(30) Priorität: 24.01.2001 DE 10103013
(43) Veröffentlichungstag der Anmeldung: 22.10.2003
(73) Patentinhaber: ZF Friedrichshafen AG, 88038 Friedrichshafen (DE)
(72) Erfinder: GRUPP, Bernhard, 88250 Weingarten (DE); REISCH, Bernhard, 88316 Isny (DE); SAUTER, Frank, 88074 Meckenbeuren (DE); SCHMIDTNER, Peter, 88131 Lindau (DE)
(86) Internationale Anmeldenummer: PCT/EP2002/000532
(87) Internationale Veröffentlichungsnummer: WO 2002/058974

(56) Entgegenhaltungen:
- WO-A-98/42551
- DE-A- 19 712 802
- US-A- 5 997 108
- PATENT ABSTRACTS OF JAPAN vol. 006, no. 058 (M-122), 15. April 1982 (1982-04-15) & JP 57 000930 A (KOMATSU LTD), 6. Januar 1982 (1982-01-06)

## Beschreibung

Die vorliegende Erfindung betrifft ein Verfahren zur Realisierung der Funktion "konstante Geschwindigkeit im Gefälle" für ein Kraftfahrzeug gemäß dem Oberbegriff des Patentanspruchs 1.

Nach dem Stand der Technik basiert die Regelung bzw. die Steuerung der Bremsleistung für den Betriebsmodus "Konstante Geschwindigkeit im Gefälle" auf einem definierten Parametersatz, der im wesentlichen für den Hauptanwendungsfall "Fahrzeug beladen" und starkes Gefälle ausgelegt ist.

Hierbei kann diese Auslegung für teilbeladene oder leere Fahrzeuge bzw. leichtes Gefälle zu Komforteinbußen führen, da das Fahrzeug in einer derartigen Situation zu starkem Überbremsen neigt.

Außerdem reagiert ein leeres Fahrzeug bei der Realisierung dieser Funktion aufgrund des geringen Gewichtes und der starken Bremsleistung heftig und zu schnell, was sich als unkomfortabel erweist.

Andererseits führt eine Auslegung der Regelung bzw. Steuerung auf ein leeres Fahrzeug und leichtes Gefälle zu einer zu großen Geschwindigkeitsabweichung von der Sollgeschwindigkeit bei voll beladenem Fahrzeug bzw. starkem Gefälle.

In der WO-A-98/42551 ist ein Verfahren zur Realisierung der Funktion "konstante Geschwindigkeit im Gefälle" bekanntgeworden. Dazu wird ein Verstärkungsfaktor in Abhängigkeit des Fahrzeuggewichts verwendet.

Der vorliegenden Erfindung liegt daher die Aufgabe zugrunde, ein Verfahren zur Realisierung der Funktion "konstante Geschwindigkeit im Gefälle" anzugeben, welches eine komfortable Bremsung ohne Geschwindigkeitsabweichung unabhängig von der Beladung des Fahrzeugs und der Topographie gewährleistet.

Diese Aufgabe wird durch die Merkmale des Patentanspruchs 1 gelöst. Weitere Ausgestaltungen gehen aus den Unteransprüchen hervor.

Demnach wird vorgeschlagen, die erforderliche Bremsleistung als Funktion des Fahrzeuggewichts einschließlich der Beladung des Fahrzeugs zu bestimmen.
Hierbei werden mehrere Parametersätze für die Regelung bzw. die Steuerung abgelegt, welche auf unterschiedliche Fahrzeuggewichte ausgelegt sind, wobei das aktuelle Fahrzeuggewicht gemessen oder berechnet wird. Kennlinien bzw. Kennfelder für die einzelnen Parameter werden in Abhängigkeit vom Fahrzeuggewicht verwendet.

Neben dem Fahrzeuggewicht kann die Topographie, beispielsweise mittels einer Navigationseinrichtung, beispielsweise einer GPS-Einrichtung, in die Anpassung der Parameter bzw. der Kennlinien einfließen.

Durch das hier vorgestellte Verfahren werden die Nachteile des Standes der Technik vermieden, so dass unabhängig von der Beladung des Fahrzeugs und der Topographie eine komfortable Bremsung ohne Geschwindigkeitsabweichung ermöglicht wird.

## Patentansprüche

1. Verfahren zur Realisierung der Funktion "konstante Geschwindigkeit im Gefälle", bei dem die erforderliche Bremsleistung als Funktion des Fahrzeuggewichts einschließlich der Beladung des Fahrzeugs bestimmt wird, **dadurch gekennzeichnet, dass** für mehrere Parametersätze für die Regelung bzw, die Steuerung Kennlinien bzw. Kennfelder abgelegt werden, welche für die einzelnen Parameter in Abhängigkeit vom Fahrzeuggewicht verwendet werden.

2. Verfahren nach Anspruch 1, **dadurch gekennzeichnet, dass** das aktuelle Fahrzeuggewicht gemessen oder berechnet wird.

3. Verfahren nach Anspruch 1 oder 2, **dadurch gekennzeichnet, dass** die erforderliche Bremsleistung zusätzlich als Funktion der Topographie bestimmt wird.

4. Verfahren nach Anspruch 3, **dadurch gekennzeichnet, dass** die Topographie mittels einer Navigationseinrichtung in die Anpassung der Parameter bzw. der Kennlinien einfließt.

## Claims

1. Method for realization of the function "constant downhill speed", with the required braking power being determined as a function of the vehicle weight including the vehicle load, **characterized in that** characteristics or maps are filed for a number of sets of control parameters, with said characteristics or maps being used for the individual parameters dependent on the vehicle weight.

2. Method according to claim 1, **characterized in that** the current vehicle weight is measured or computed.

3. Method according to claim 1 or 2, **characterized in that** the required braking power is additionally determined as a function of the topography.

4. Method according to claim 3, **characterized in that** by means of a navigation system, the topography is used for adjustment of parameters or characteristics.

## Revendications

1. Procédé de réalisation de la fonction "vitesse constante en descente", dans lequel la puissance de freinage nécessaire est déterminée comme fonction du poids du véhicule, y compris la charge du véhicule, **caractérisé en ce que** pour plusieurs jeux de données pour le réglage ou la commande sont enregistrées des lois ou des cartographies, celles-ci étant utilisées pour les différents paramètres en fonction du poids du véhicule.

2. Procédé selon la revendication 1, **caractérisé en ce que** le poids du véhicule actuel est mesuré ou calculé.

3. Procédé selon la revendication 1 ou 2, **caractérisé en ce que** la puissance de freinage nécessaire est, en plus, déterminée comme fonction de la topographie.

4. Procédé selon la revendication 3, **caractérisé en ce que** la topographie est prise en considération lors de l'adaptation des paramètres ou des lois, et cela à l'aide d'un dispositif de navigation.
